# NEUE EUROPÄISCHE PATENTSCHRIFT

(11) **EP 1 343 709 B2**
(45) Veröffentlichungstag und Bekanntmachung des Hinweises auf die Entscheidung über den Einspruch: **20.07.2011**
(45) Hinweis auf die Patenterteilung: 16.06.2004
(21) Anmeldenummer: 01995664.8
(22) Anmeldetag: 26.11.2001
(51) Int. Cl.: B65G 49/04

(54) **ANLAGE ZUR BEHANDLUNG, INSBESONDERE ZUM LACKIEREN, VON GEGENSTÄNDEN, INSBESONDERE VON FAHRZEUGKAROSSERIEN**
FACILITY FOR PROCESSING, ESPECIALLY PAINTING OBJECTS, ESPECIALLY VEHICLE BODIES
INSTALLATION DESTINEE AU TRAITEMENT, EN PARTICULIER A LA MISE EN PEINTURE D'OBJETS, NOTAMMENT DE CARROSSERIES DE VEHICULES

(30) Priorität: 20.12.2000 DE 10063448
(43) Veröffentlichungstag der Anmeldung: 17.09.2003
(73) Patentinhaber: Eisenmann Maschinenbau KG (Komplementär: Eisenmann-Stiftung), 71032 Böblingen (DE)
(72) Erfinder: EHRENLEITNER, Franz, 70439 Stuttgart (DE); WEINAND, Hans-Joachim, 71254 Ditzingen (DE)
(74) Vertreter: Ostertag, Reinhard
(86) Internationale Anmeldenummer: PCT/EP2001/013715
(87) Internationale Veröffentlichungsnummer: WO 2002/049943

(56) Entgegenhaltungen:
- EP-A2- 1 974 145
- WO-A1-02/26396
- WO-A1-98/15359
- DE-A- 19 641 048
- DE-A1- 2 902 352
- DE-A1- 4 033 333
- DE-A1- 4 427 191
- DE-A1- 10 047 968
- DE-A1- 19 706 175
- DE-A1- 19 744 446
- DE-A1- 19 934 746
- DE-C1- 4 410 477
- GB-A- 2 236 734
- JP-A- 9 155 264
- JP-A- 63 229 167
- US-A- 3 056 359
- US-A- 5 725 669
- DATABASE ESPACENET FLAEKT AB 05 Mai 1998 KREUZER BERND: 'Auszug aus Espacenet bezüglich AU4707297'

## Beschreibung

Die Erfindung betrifft eine Anlage zur Behandlung, insbesondere zum Lackieren, von Gegenständen, insbesondere von Fahrzeugkarosserien, mit
a) mindestens einem Bad, in dem sich eine Behandlungsflüssigkeit, insbesondere ein Lack, befindet, in welchen die Gegenstände eingetaucht werden sollen;
b) einer Fördereinrichtung, mit welcher die Gegenstände in einer kontinuierlichen oder intermittierenden Translationsbewegung durch die Anlage geführt werden können;
c) einer Vielzahl von Eintaucheinrichtungen, die mit der Fördereinrichtung verbunden sind, jeweils einen Gegenstand tragen und in der Lage sind, diesen Gegenstand in das Bad einzutauchen.

Eine Anlage dieser Art ist in der DE 196 41 048 C2 beschrieben. Hier besteht die Fördereinrichtung aus Führungsschienen, in denen nicht näher dargestellte Antriebsmittel verlaufen; als Beispiele für diese Antriebsmittel werden Ketten, Zugseile, Getriebestangen oder dergleichen genannt. Eine Vielzahl von Halterungsgestellen für zu lackierende Karosserien ist in regelmäßigen Abständen mit den Antriebsmitteln verbunden und wird von diesen in Translationsbewegung versetzt. Die Translationsbewegungen aller zu lackierenden Karosserien sind auf diese Weise zwangsläufig miteinander gekoppelt. Die Karosserien werden durch eine Drehbewegung der Halterungsgestelle um eine Achse, die horizontal und senkrecht zur Richtung der Translationsbewegung verläuft, in die Behandlungsflüssigkeit ein- und ausgetaucht. Die Kräfte, welche die Halterungsgestelle verdrehen, werden dabei durch eine Art Nocken/Kulisseneinrichtung aus der Translationsbewegung abgeleitet, so daß der momentane Drehwinkel der Halterungsgestelle sich immer eindeutig aus der Position des Halterungsgestelles in Translationsrichtung ergibt.

Nachteilig bei dieser bekannten Anlage ist deren mangelnde Flexibilität: Wie bereits erwähnt, können sich alle zu lackierenden Gegenstände nur gemeinsam in Transportrichtung bewegen; alle Gegenstände in der Anlage müssen in derselben Weise, mit derselben Kinematik und derselben Geschwindigkeit durch die Bäder hindurchgeführt werden. Dies wird den Anforderungen an eine moderne Anlage häufig nicht gerecht, in der aufeinanderfolgende Gegenstände in unterschiedlicher Weise behandelt werden sollen.

Aufgabe der vorliegenden Erfindung ist es, eine Anlage der eingangs genannten Art so auszugestalten, daß sie insgesamt eine flexiblere Behandlung der einzelnen Gegenstände zuläßt.

Diese Aufgabe wird erfindungsgemäß durch die im Anspruch 1 angegebenen Merkmale gelöst.

Erfindungsgemäß wird also die beim Stande der Technik vorhandene starre Kopplung zwischen den verschiedenen Halterungsgestellen aufgegeben und statt dessen eine Vielzahl von einzelnen Transportwagen vorgesehen, die sich grundsätzlich unabhängig voneinander bewegen können. Jeder dieser Transportwagen besitzt seinen eigenen Antrieb für die Translationsbewegung. Die Geschwindigkeiten der einzelnen Transportwagen können also unabhängig voneinander gewählt werden; zwischen aufeinanderfolgenden Transportwagen können sich die Abstände vergrößern oder verkleinern. Darüber hinaus ist es möglich, die Eintauchbewegung der Gegenstände unabhängig von der Translationsbewegung zu führen, da für diese Eintauchbewegung ein gesonderter Antrieb vorgesehen ist. So kann beispielsweise auch ein Bad überfahren werden, indem an der entsprechenden Stelle des Transportweges der Antrieb des Wagens für die Eintauchbewegung einfach nicht aktiviert wird. Es ist auch möglich, ein Bad zunächst zu überfahren und dann in einer rückwärts gerichteten Bewegung den Eintauchvorgang des Gegenstandes vorzunehmen. Diese Eintauchrichtung kann insbesondere bei Karosserien, die sich öffnende Türen oder dergleichen besitzen, günstiger als eine Eintauchbewegung in Vorwärtsrichtung sein. Außerdem kann jeder zu lackierende Gegenstand individuell einer Schaukelbewegung innerhalb des Bades unterzogen werden. Hohlräume aufweisende Gegenstände, wie diese Fahrzeugkarosserien sind, können oberhalb des jeweiligen Bades durch geeignete Bewegungen vollständig entleert werden, so daß sich eine geringstmögliche Badverschleppung ergibt. Die Geschwindigkeit der Translationsbewegung kann über und in den Bädern reduziert werden, was dort lange Verweilzeiten ergibt, während die Translationsgeschwindigkeit zwischen den Bädern erhöht werden kann. Die Aufgabe und Abgabe der zu behandelnden Gegenstände dagegen kann im Stillstand erfolgen. Insgesamt lassen sich auf diese Weise kürzest mögliche Badlängen erzielen, so daß der Platzbedarf des gesamten Systemes reduziert wird.

Bei Störungen können einzelne Transportwagen aus der Anlage leicht herausgenommen werden. Die Gefahr der Badverschmutzung ist dadurch reduziert, daß alle Fördertechnikkomponenten seitlich der Bäder angeordnet werden können.

Eine vorteilhafte Weiterbildung der erfindungsgemäßen Anlage zeichnet sich dadurch aus, daß mindestens ein vertikal ausgerichteter Transportflansch sich parallel zu einer Lauffläche erstreckt und daß der Antrieb für die Translationsbewegung jeden Transportwagens einen Preßrollenantrieb umfaßt, der mindestens zwei an gegenüberliegenden Seitenflächen des Transportflansches unter Druck abrollende Preßrollen umfaßt, von denen mindestens eine angetrieben ist. Der Antrieb der Transportwagen für die Translationsbewegung erfolgt also nicht über die Laufräder selbst sondern über den erwähnten, gesonderten Preßrollenantrieb, der mit dem stationären Transportflansch zusammenwirkt. Dies erleichtert die Steuerung der Transportwagen auf ihrem Weg durch die Anlage. Außerdem lassen sich mit einem derartigen Antrieb hohe Beschleunigungen und Verzögerungen erreichen.

Die Läufräder der Transportwagen können mittels eines Drehschemels um eine vertikale Achse verdrehbar sein. Bei dieser Ausgestaltung der Erfindung sind die Laufräder also lenkbar, was etwa im Vergleich mit normalen Schienenlaufrädern den Verschleiß reduziert und die Genauigkeitsanforderungen verringert. Insbesondere lassen sich die Transportwagen durch eine entsprechende Verdrehung der Drehschemel der Laufräder um die senkrechte Achse auch seitlich, senkrecht zu ihrer Längserstreckung, aus der Förderlinie wegfahren.

Dabei sind vorzugsweise mindestens zwei Räder jeden Transportwagens mit einem vorauseilenden Führungsglied versehen, welches ein Profil der zugeordneten Lauffläche umgreift und mit dem Drehschemel verbunden ist. Durch diese Führungsglieder werden die Transportwagen durch die Anlage geleitet, wobei Kurvenfahrten ohne weiteres möglich sind. Die beiden anderen Räder der Transportwagen brauchen nicht geführt zu werden; sie können als reine Nachfolgeräder ausgebildet sein.

Die genaue Ausgestaltung der Lagerung und Führung der Laufräder sowie die Konstruktion der Laufräder selbst kann sich an den Bauweisen orientieren, die in der DE 44 27 191 C2, der DE 197 44 446 A1 oder auch in der DE 199 34 746 A1 beschrieben sind.

Die Eintaucheinrichtung kann eine Dreheinrichtung sein, welche die Gegenstände durch eine Drehung um eine etwa horizontale Achse in die Behandlungsflüssigkeit eintaucht. Die vorliegende Erfindung läßt sich also auch bei einer Eintauchkinematik verwenden, wie sie in der oben beschriebenen DE 196 41 048 C2 verwirklicht ist.

Ein Ausführungsbeispiel der Erfindung wird nachfolgend anhand der Zeichnung näher erläutert; es zeigen
- Figur 1:: einen perspektivischen Ausschnitt aus einer Tauchlackieranlage für Fahrzeugkarosserien;
- Figur 2:: einen Schnitt durch die Anlage von Figur 1 senkrecht zur Bewegungsrichtung der Fahrzeugkarosserien, gesehen von rechts unten;

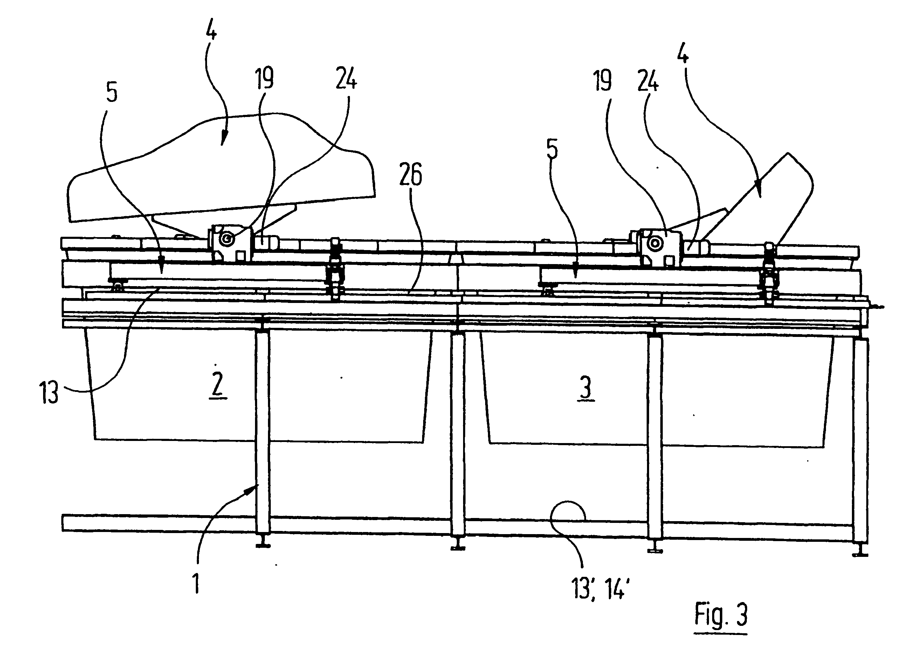

- Figur 3:: eine Seitenansicht des Ausschnittes der Lackieranlage von Figur 1;
- Figur 4:: eine Seitenansicht eines Transportwagens, der in der Lackieranlage verwendet wird, mit einer hieran befestigten Fahrzeugkarosserie;
- Figur 5:: eine perspektivische Ansicht des Transportwagens samt Fahrzeugkarosserie von Figur 4;
- Figur 6:: eine vergrößerte Detailansicht im Bereich des mit dem Buchstaben A gekennzeichneten Kreises von Figur 2;
- Figur 7:: eine vergrößerte Detailansicht im Bereich des mit dem Buchstaben B gekennzeichneten Kreises von Figur 2.

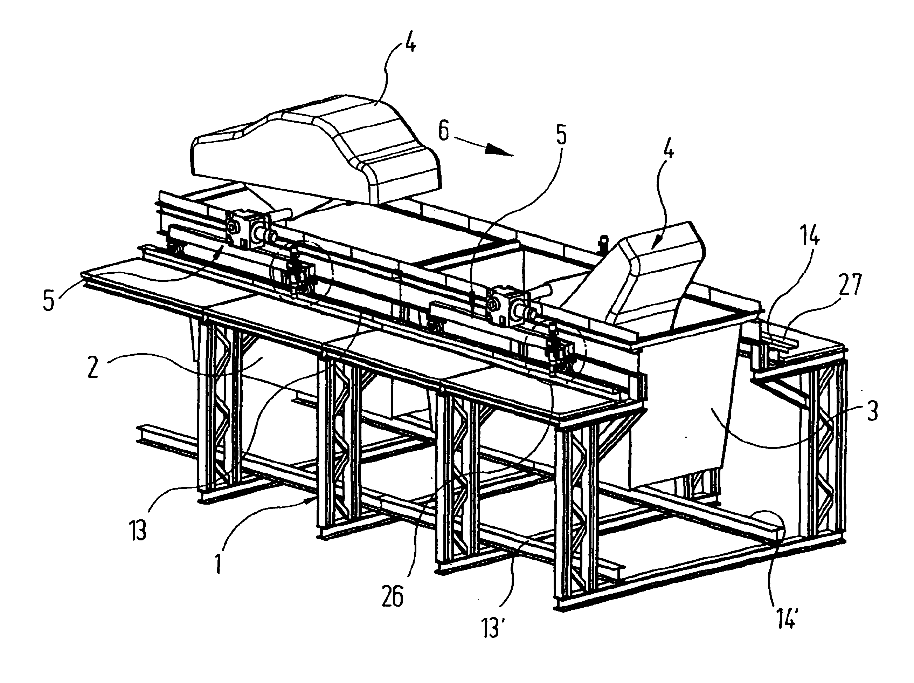

Die in der Zeichnung dargestellte Tauchlackieranlage für Fahrzeugkarosserien umfaßt eine eine Vielzahl von senkrechten Ständern und horizontalen Trägern aufweisende Stahlkonstruktion 1, in der zwei Badbehälter 2, 3 aufgehängt sind. Die Badbehälter 2, 3 sind bis zu einem bestimmten Spiegel mit flüssigem Lack angefüllt, in welche Fahrzeugkarossieren 4 eingetaucht werden sollen. Diese Fahrzeugkarosserien 4 werden hierzu mit Hilfe von einzelnen Transportwagen 5 in Richtung des Pfeiles 6 (vgl. Figur 1) transportiert, wobei diese Translationsbewegung der einzelnen Transportwagen 5 unabhängig voneinander erfolgen kann und im Zuge dieser unabhängigen Bewegungen Verlangsamungen, Beschleunigungen, Stopps und auch Bewegungsumkehrungen möglich sind. Insgesamt erfolgt jedoch ein Transport der Fahrzeugkarosserien 4 in Richtung des Pfeiles 6 von Figur 1.

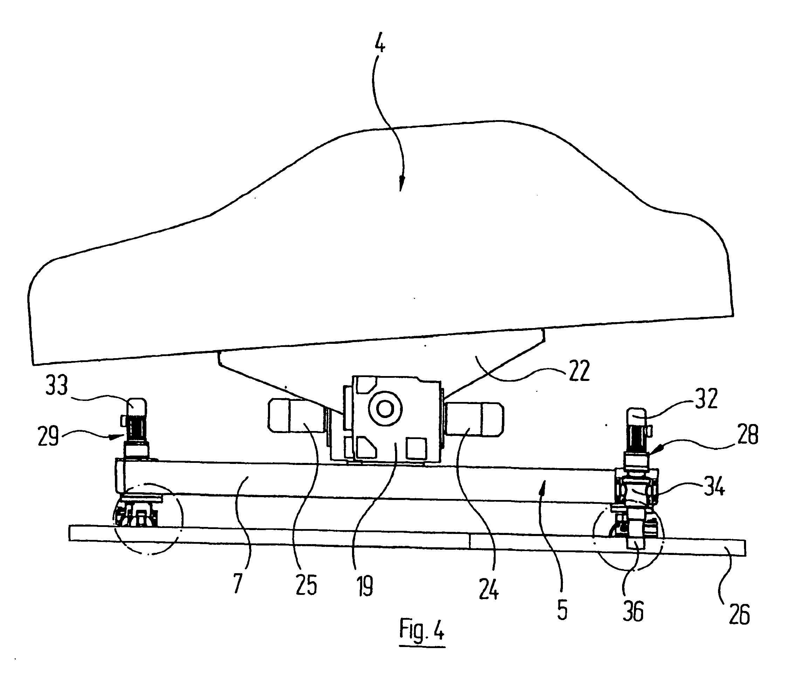

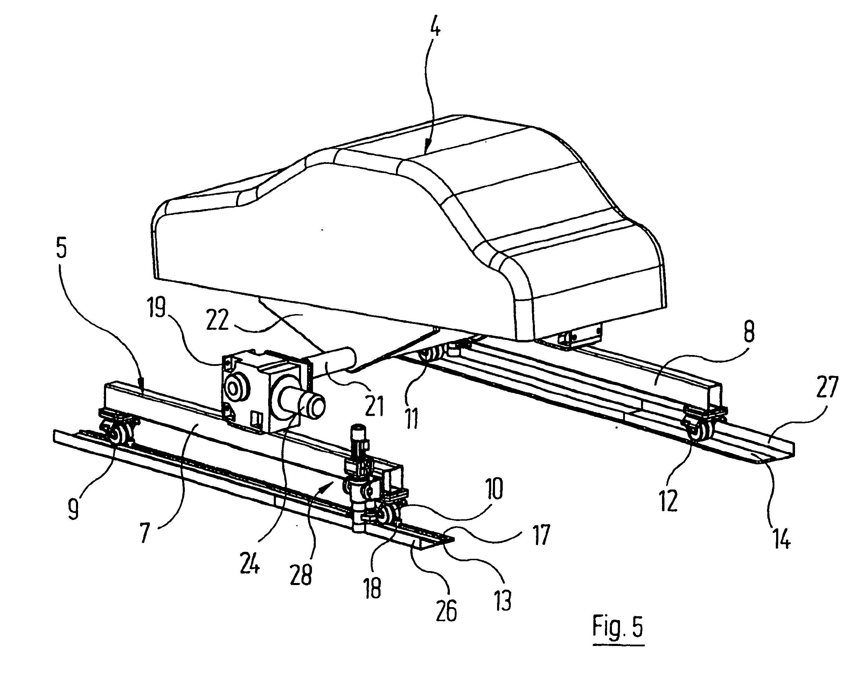

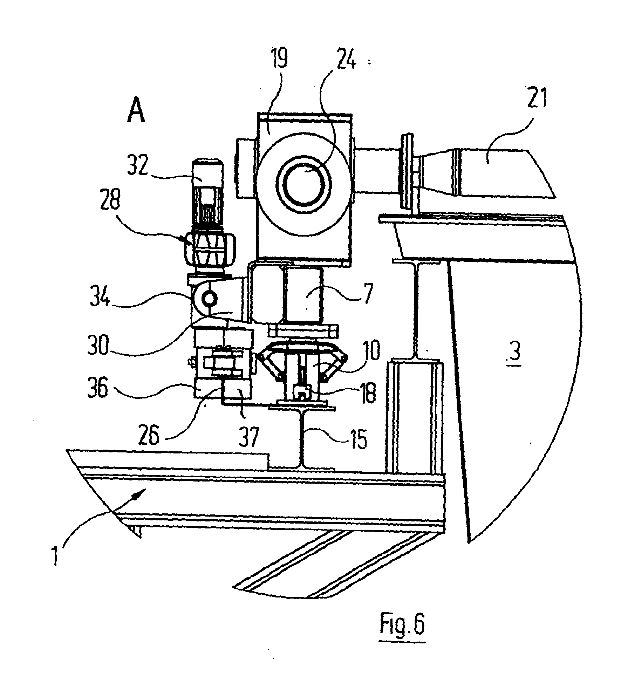

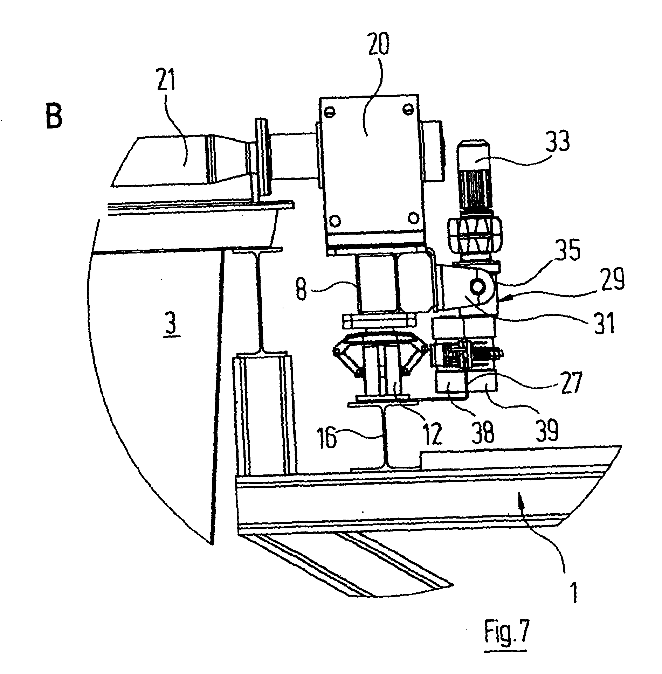

Die genaue Bauweise der Transportwägen 5 ist in den Figuren 4 bis 7 näher dargestellt. Wie insbesondere die Figur 5 zeigt, besitzt jeder Transportwagen 5 zwei Längstraversen 7, 8, an deren Unterseite jeweils zwei Doppelräder 9, 10 bzw. 11, 12 um horizontale Achse drehbar gelagert sind. Zusätzlich sind die Räder 9 bis 12 jeweils mit Hilfe eines in Einzelnen nicht dargestellten Drehschemels um eine vertikale Achse verdrehbar, so daß die Ausrichtung der Doppelräder 9 bis 12 gegenüber den jeweiligen Längstraversen 7, 8 verändert werden kann.

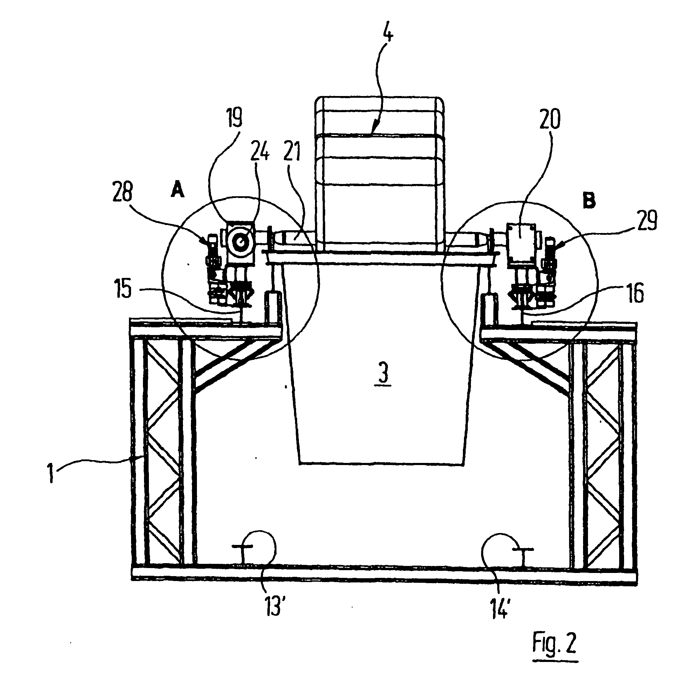

Die Doppelräder 9, 10 rollen auf einer ersten Lauffläche 13 und die Doppelräder 11, 12 auf einer hierzu parallen zweiten Lauffläche 14 ab. Die Laufflächen 13, 14 sind ihrerseits auf jeweils einem I-Profilträger 15, 16 montiert, der von dem Stahlbau 1 getragen wird (vgl. insbesondere Figur 2) .

In der Mitte der in Figur 5 unteren, ersten Lauffläche 13 ist eine Führungsrippe 17 angebracht, die von eine komplementäre Ausnehmung aufweisenden Führungsgliedern 18 übergriffen wird. Jeweils ein Führungsglied 18 ist mit dem Drehschemel eines zugeordneten Doppelrads 9 bzw. 10 so verbunden, daß es dieses Doppelrad 9 bzw. 10 entsprechend dem Verlauf der Führungsrippe 17 um die vertikale Achse verdreht. Auf diese Weise folgen die Doppelräder 9, 10 der ersten Lauffläche 13. Die der zweiten, in Figur 5 oberen Lauffläche 14 zugeordneten Doppelräder 11, 12 dagegen sind als reine Nachlaufräder konzipiert; das heißt, es sind keine gesonderten Führungsmittel zur Beeinflussung der Winkellage der Räder um deren vertikale Drehachse vorgesehen. Auf diese Weise können Genauigkeitsanforderungen an die Führungsmittel, mit denen die Transportwagen 5 auf den Laufflächen 13, 14 gehalten werden, gering gehalten werden.

In der Mitte der beiden Längstraversen 7, 8 der Transportwagen 5 ist jeweils ein Getriebeblock 19 bzw. 20 montiert, deren Abtriebswellen durch eine Drehwelle 21 verbunden sind. Auf der Drehwelle 21 sind in Abstand zueinander zwei Befestigungsplatten 22, 23 befestigt, die in der Seitenansicht eine Dreiecksform haben. Auf den normalerweise nach oben zeigenden, längsten Kanten dieser Dreiecke sind die Fahrzeugkarosserien 4 in geeigneter, nicht dargestellter Weise befestigt.

An die Getriebeblocks 19, 20 ist jeweils ein Elektromotor 24 bzw. 25 angeflanscht. Die Anordnung ist so, daß bei Bestromung der Elektromotoren 24, 25 die Drehwelle 21 in einer bestimmten Richtung verdreht wird, wobei in sie Kräfte von beiden Seiten her eingeleitet werden. Die Verdrehung der Drehwelle 21 ist von einer entsprechenden Verdrehung der Karosserien 4 um die Achse der Drehwelle 21 begleitet.

Die Doppelräder 19 bis 12 der Transportwagen 5 sind selbst nicht angetrieben. Der Vorwärtstrieb der Transportwagen 5 erfolgt vielmehr über einen gesonderten Antrieb, der nachfolgend anhand der Figuren 5 bis 7 näher erläutert wird.

Parallel zu den beiden Laufflächen 13, 14 erstrecken sich zwei senkrecht ausgerichtete, stationäre Antriebsflansche 26, 27. Diese wirken jeweils mit einem Preßrollenantrieb 28 bzw. 29 zusammen, der an der Seitenfläche der benachbarten Längstraverse 7, 8 mittels einer Lasche 30 bzw. 31 befestigt ist. Die Preßrollenantriebe 28, 29 umfassen jeweils einen elektrischen Antriebsmotor 32, 33 und ein Antriebsgetriebe 34, 35. Letzteres treibt die parallelen, vertikalen Achsen zweier Preßrollen 36, 37 bzw. 38, 39 an, die von beiden Seiten her gegen den jeweils zugeordneten Antriebsflansch 26 bzw. 27 angepreßt werden. Werden die Antriebsmotoren 32, 33 bestromt, laufen die Preßrollen 36, 37 bzw. 38, 39 auf den jeweiligen Seitenflächen der Antriebsflansche 26, 27 ab und bewegen dabei den Transportwagen 5 auf den Laufflächen 13, 14 vorwärts.

Jeder Transportwagen 5 umfaßt seine eigene Wagensteuerung, unter deren Regime er sowohl seine Translationsbewegung entlang der Laufflächen 13, 14 als auch die Drehbewegung der Fahzeugkarosserien 4 um die Achse der Drehwelle 21 ausführt.

Die Funktion der oben beschriebenen Tauchlackieranlage insgesamt ist wie folgt:

Die zu lackierenden Fahrzeugkarosserien werden jeweils auf einem eigenen Transportwagen 5 den Bädern 3, 4 nacheinander zugeführt. Hat das vorauseilende Ende einer Fahrzeugkarosserie 4 den Beginn des in Transportrichtung 6 ersten Bades 2 erreicht, entscheidet die Wagensteuerung, ob diese Fahrzeugkarosserie 4 in dieses Bad 2 eingetaucht werden soll. Wird dies bejaht, werden die Elektromotoren 24, 25 bestromt. In Abstimmung mit der Geschwindigkeit der Translationsbewegung, die durch die Preßrollenantriebe 28, 29 vorgegeben wird, werden die Elektromotoren 24, 25 bestromt und die Fahrzeugkarosserie 4 um die Achse der Drehwelle 21 verdreht und in den im Bad 2 enthaltenen Lack eingetaucht. Je nach Wunsch kann die Translationsbewegung des Transportwagens 5 bei eingetauchter Fahrzeugkarosserie 4 verlangsamt oder angehalten und die Fahrzeugkarosserie 4 einer Schaukelbewegung unterzogen werden, indem die Elektromotoren 24, 25 abwechselnd gegensinnig bestromt werden. Nach der gewünschten Verweilzeit im Bad 2 wird die Fahrzeugkarosserie 4 durch Betätigung der Elektromotoren 24, 25 und Verdrehung um die Achse der Drehwelle 21 wieder aus dem Bad 2 herausgehoben.

Bei Bedarf kann die Fahrzeugkarosserie 4 oberhalb des Bades 2 durch entsprechende Bestromung der Elektromotoren 24, 25 in unterschiedliche Winkelpositionen gebracht werden, um ein möglichst vollständiges Auslaufen und Abtropfen des Lacks in das zugeordnete Bad 2 zu ermöglichen und auf diese Weise die Verschleppung von Lack zu minimieren. Sodann wird durch Betätigung der Preßrollenantriebe 28, 29 die Translationsbewegung des Transportwagens 5 wieder aufgenommen, ggfs. mit höherer Geschwindigkeit, bis die Fahrzeugkarosserie 4 das in Bewegungsrichtung zweite Bad 3 erreicht hat. Dort können dieselben Vorgänge erneut ablaufen, wie dies für das erste Bad 2 beschrieben wurde.

In bestimmten Lackieranlagen folgen unterschiedliche Fahrzeugkarosserien 4 aufeinander, die in unterschiedlicher Weise behandelt werden müssen. Dies ist mit der beschriebenen Lackieranlage ohne weiteres möglich. Beispielsweise kann ein Bad 2, 3 vollständig überfahren werden; die Fahrzeugkarosserie 4 kann auch mit einer rückwärts gerichteten, kombinierten Dreh- und Translationsbewegung in das fragliche Bad 2, 3 eingetaucht werden. Das "Ausheben" der Fahrzeugkarosserie 4 aus dem Bad 2, 3 kann durch Fortsetzung der Drehbewegung in dem Drehsinn geschehen, in dem der Eintauchvorgang erfolgt war; alternativ ist es auch möglich, durch Umkehr der Drehrichtung der Drehwelle 21 die Fahrzeugkarosserie 4 auf derselben Seite aus dem Bad 2, 3 wieder herauszudrehen, auf der sie zuvor eingetaucht war.

Da, wie erwähnt, aufeinanderfolgende Fahrzeugkarosserien 4 in unterschiedlicher Weise in den Bädern 2, 3 behandelt werden können, können sich unterschiedliche Abstände zwischen aufeinanderfolgenden Transportwagen 5 einstellen. Diese unterschiedlichen Abstände können auf Wunsch durch entsprechende Beschleunigung bzw. Verzögerung aufeinanderfolgender Transportwagen 5 wieder vergleichmäßigt werden.

Am Anfang der Lackieranlage befindet sich eine nicht dargestellte Aufgabestation, an welcher die einzelnen Fahrzeugkarosserien 4 auf einen stehenden Transportwagen 5 aufgesetzt und an diesem befestigt werden. In entsprechender Weise befindet sich am Ende der Lackieranlage eine Abnahmestation, an welcher die Fahrzeugkarosserien 4 von einem stehenden Transportwagen 5 abgenommen werden. Sowohl die Aufgabe- als auch die Abnahmestation sind als Hubstationen ausgebildet. In der Abnahmestation wird der entleerte Transportwagen 5 nach unten abgesenkt, bis die Laufflächen 13, 14, die sich auch in die Abnahmestation hinein fortsetzen, mit parallelen Laufflächen 13', 14' fluchten, die sich in einem Untergeschoß des Stahlbaues 1 zurück bis zur Aufgabestation erstrecken. Die leeren Transportwagen 5 werden auf diesen Laufflächen 13', 14' unterhalb der Bäder 2, 3 entgegen der Richtung des Teils 6 zur Aufgabestation gebracht, was mit einer höheren Geschwindigkeit geschehen kann. In der Aufgabestation werden die Transportwagen 5 wieder auf das Niveau der oberen Laufflächen 13, 14 gebracht und, wie schon beschrieben, mit neuen zu lackierenden Fahrzeugkarosserien 4 bestückt.

Wie insbesondere der Figur 1 zu entnehmen ist, befinden sich sämtliche Fördertechnikkomponenten der beschriebenen Lackieranlage seitlich von den Bädern 2, 3, so daß die in den Bädern 2, 3 befindlichen Flüssigkeiten von diesen Fördertechnikkomponenten nicht verschmutzt werden können.

## Patentansprüche

1. Anlage zur Behandlung, insbesondere zum Lackieren, von Fahrzeugkarosserien (4) mit
a) mindestens einem Bad (2, 3), in dem sich eine Behandlungsflüssigkeit, insbesondere ein Lack befindet, in welche die Fahrzeugkarosserien (4) eingetaucht werden sollen;
b) einer Fördereinrichtung (5, 13, 14), mit welcher die Fahrzeugkarosserien (4) in einer kontinuierlichen oder intermittierenden Translationsbewegung durch die Anlage geführt werden können:
c) einer Vielzahl von Eintaucheinrichtungen (21, 22), die mit der Fördereinrichtung (5, 13, 14) verbunden sind, jeweils eine Fahrzeugkarosserie (4) tragen und in der Lage sind, diese Fahrzeugkarosserie (4) in das Bad (2, 3) einzutauchen;
wobei
d) die Fördereinrichtung (5,13, 14) eine Vielzahl von unabhängigen, mit Laufrädern (9, 10, 11, 12) versehenen Transportwagen (5) umfasst, die auf Laufflächen (13, 14) geführt abrollen und jeweils einen gesonderten Antrieb (32, 33) für die Translationsbewegung und einen von diesem unabhängig arbeitenden Antrieb (19, 20, 24, 35) für die Eintauchbewegung aufweisen, wobei jeder Transportwagen (5) zwei Längstraversen (7, 8), an deren Unterseite jeweils zwei Doppelräder (9, 10, 11, 12) um horizontale Achsen drehbar gelagert sind, besitzt, und wobei die Doppelräder (9, 10) auf einer ersten Lauffläche (13) und die Doppelräder (11, 12) auf einer hierzu parallelen zweiten Lauffläche (14) abrollen;
e) am Anfang der Anlage eine Aufgabestation angeordnet ist, an welcher die einzelnen Fahrzeugkarosserien (4) auf einen stehenden Transportwagen (5) aufgesetzt und an diesem befestigt werden;
f) am Ende der Anlage eine Abnahmestation angeordnet ist, an welcher die Fahrzeugkarosserien (4) von einem stehenden Transportwagen (5) abgenommen werden.

2. Anlage nach Anspruch 1, **dadurch gekennzeichnet,**
**daß** mindestens ein vertikal ausgerichteter Transportflansch (26, 27) sich parallel zu einer Lauffläche (13, 14) erstreckt und daß der Antrieb (32, 33) für die Translationsbewegung jeden Transportwagens (5) einen Preßrollenantrieb (28, 29) umfaßt, der mindestens zwei an gegenüberliegenden Seitenflächen des Transportflansches (26, 27) unter Druck abrollende Preßrollen (36, 37, 38, 39) umfaßt, von denen mindestens eine angetrieben ist.

3. Anlage nach Anspruch 1 oder 2, **dadurch gekennzeichnet,**
**daß** die Laufräder (9, 10, 11, 12) der Transportwagen (5) mittels eines Drehschemels um eine vertikale Achse verdrehbar sind.

4. Anlage nach Anspruch 3, **dadurch gekennzeichnet,**
**daß** mindestens zwei Laufräder (9, 10) jeden Transportwagens (5) mit einem vorauseilenden Führungsglied (18) versehen sind, welches ein Profil (17) der zugeordneten Lauffläche (13) umgreift und mit dem Drehschemel des zugeordneten Laufrads (9, 10) verbunden ist.

5. Anlage nach einem der vorhergehenden Ansprüche,
**dadurch gekennzeichnet, daß** die Eintaucheinrichtung (19, 20, 21, 22, 23, 24, 25) eine Dreheinrichtung ist, welche die Gegenstände (4) durch eine Drehung um eine etwa horizontale Achse in die Behandlungsflüssigkeit eintaucht.

## Claims

1. Installation for processing, in particular painting, vehicle bodies (4), comprising:
a) at least one bath (2, 3) containing a processing liquid, in particular a paint, in which the vehicle bodies (4) are to be dipped;
b) a conveying device (5, 13, 14) with which the vehicle bodies (4) can be guided through the installation in a continuous or intermittent translational movement;
c) a plurality of dipping devices (21, 22) which are connected to the conveying device (5, 13, 14) and which in each case carry a vehicle body (4) and are able to dip this vehicle body (4) into the bath (2, 3),
wherein
d) the conveying device (5, 13, 14) includes a plurality of independent transport carriages (5) provided with running wheels (9, 10, 11, 12), which carriages (5) run in a guided manner on running surfaces (13, 14) and have in each case a separate drive (32, 33) for the translational movement and a drive (19, 20, 24, 25) operating independently thereof for the dipping movement, each transport carriage (5) having two longitudinal members (7, 8), to the underside of which two double wheels (9, 10, 11, 12) are in each case mounted rotatably about horizontal axes, and the double wheels (9, 10) running on a first running surface (13) and the double wheels (11, 12) running on a second running surfaces (14) parallel thereto;
e) a loading station, at which the individual vehicle bodies (4) are placed on a stationary transport carriage (5) and are attached thereto, is arranged at the beginning of the installation;
f) a removal station, at which the vehicle bodies (4) are removed from a stationary transport carriage (5), is arranged at the end of the installation.

2. Installation according to claim 1, **characterised in that** at least one vertically oriented transport flange (26, 27) extends parallel to a running surface (13, 14) and **in that** the drive (32, 33) for the translational movement of each transport carriage (5) includes a friction roller drive (28, 29) which includes at least two friction rollers (36, 37, 38, 39) rolling under pressure on opposed lateral faces of the transport flange (26, 27), at least one of which friction rollers (36, 37, 38, 39) is driven.

3. Installation according to claim 1 or 2, **characterised in that** the running wheels (9, 10, 11, 12) of the transport carriages (5) are swivellable about a vertical axis by means of a swivelling bolster.

4. Installation according to claim 3, **characterised in that** at least two running wheels (9, 10) of each transport carriage (5) are provided with a leading guide member (18) which engages around a profile (17) of the associated running surface (13) and is connected to the swivelling bolster of the associated running wheel (9, 10).

5. Installation according to any one of the preceding claims, **characterised in that** the dipping device (19, 20, 21, 22, 23, 24, 25) is a rotary device which dips the objects (4) into the processing liquid by means of a rotation about an approximately horizontal axis.

## Revendications

1. Installation destinée au traitement, en particulier à la mise en peinture de carrosseries de véhicules (4), comprenant
a) au moins un bain (2, 3) dans lequel se trouve un liquide de traitement, en particulier une peinture dans laquelle les carrosseries de véhicules (4) doivent être plongées ;
b) un dispositif de convoyage (5, 13, 14) par lequel les carrosseries de véhicules (4) peuvent être menées à travers l'installation, en accomplissant un mouvement translatoire continu ou intermittent ;
c) un grand nombre de dispositifs d'immersion (21, 22) qui sont reliés audit dispositif de convoyage (5, 13, 14), portent respectivement une carrosserie de véhicule (4) et sont en mesure de plonger cette carrosserie de véhicule (4) dans le bain (2, 3),
dans lequel
d) le dispositif de convoyage (5, 13, 14) englobe un grand nombre de chariots de transport (5) indépendants munis de roues de roulement (9, 10, 11, 12), qui roulent en étant guidés sur des surfaces de roulement (13, 14) et présentent, à chaque fois, un entraînement distinct (32, 33) affecté au mouvement de translation, et un entraînement (19, 20, 24, 25) affecté au mouvement d'immersion, fonctionnant indépendamment de l'entraînement précité, chaque chariot de transport (5) possédant deux longerons (7, 8) à la face inférieure desquels deux roues jumelées respectives (9, 10, 11, 12) sont montées à rotation autour d'axes horizontaux, et les roues jumelées (9, 10) roulant sur une première surface de roulement (13) et les roues jumelées (11, 12) roulant sur une seconde surface de roulement (14) parallèle à la surface précitée ;
e) au début de l'installation est prévu un poste de délivrance, dans lequel les carrosseries de véhicules (4) individuelles sont déposées sur un chariot de transport (5) stationnaire et sont fixées à celui-ci ;
f) à l'extrémité de l'installation est prévu un poste de prélèvement, dans lequel les carrosseries de véhicules (4) sont prélevées d'un chariot de transport (5) stationnaire.

2. Installation selon la revendication 1, **caractérisée par le fait qu'**au moins une aile de transport (26, 27), orientée verticalement, s'étend parallèlement à une surface de roulement (13, 14) ; et **par le fait que** l'entraînement (32, 33), affecté au mouvement de translation de chacun des chariots de transport (5), englobe un entraînement par galets presseurs (28, 29) comprenant au moins deux galets presseurs (36, 37, 38, 39) qui roulent, sous l'effet d'une pression, sur des surfaces latérales opposées de l'aile de transport (26, 27), et dont au moins l'un est entraîné.

3. Installation selon la revendication 1 ou 2, **caractérisée par le fait que** les roues de roulement (9, 10, 11, 12) des chariots de transport (5) peuvent être animées d'une rotation autour d'un axe vertical, au moyen d'une traverse pivotante.

4. Installation selon la revendication 3, **caractérisée par le fait qu'**au moins deux roues de roulement (9, 10) de chacun des chariots de transport (5) sont dotées d'un organe de guidage (18) occupant une position frontale, qui ceinture un profilé (17) de la surface de roulement (13) associée, et est relié à la traverse pivotante de la roue de roulement (9, 10) associée.

5. Installation selon l'une des revendications précédentes, **caractérisée par le fait que** le dispositif d'immersion (19, 20, 21, 22, 23, 24, 25) peut être un dispositif rotatif qui plonge les objets (4) dans le liquide de traitement, par une rotation autour d'un axe sensiblement horizontal.
